# EUROPÄISCHE PATENTSCHRIFT

(11) **EP 1 884 489 B1**
(45) Veröffentlichungstag und Bekanntmachung des Hinweises auf die Patenterteilung: **27.05.2009**
(21) Anmeldenummer: 07112999.3
(22) Anmeldetag: 24.07.2007
(51) Int. Cl.: B65G 47/20, B65G 65/42, B65G 69/04, B65G 69/10, G01F 13/00

(54) **Vorrichtung und Verfahren zum dosierten Abgeben eines schütt- oder rieselfähigen Gutes**
Device and method for metered output of bulk or free-flowing goods
Dispositif et procédé destinés à la sortie dosée d'une marchandise pouvant s'écouler ou en vrac

(30) Priorität: 31.07.2006 DE 102006035268
(43) Veröffentlichungstag der Anmeldung: 06.02.2008
(73) Patentinhaber: Dr. AUGUST OETKER NAHRUNGSMITTEL KG, 33617 Bielefeld (DE)
(72) Erfinder: Rohe, Thomas, 49632 Essen i.O. (DE); große Kohorst, Werner, 49413 Dinklage (DE); Dr. Spiegel, Udo, 33619 Bielefeld (DE); Schäfer, Thomas, 33659 Bielefeld (DE); Pisch, Torsten, 33719 Bielefeld (DE)
(74) Vertreter: Taruttis, Stefan Georg

(56) Entgegenhaltungen:
- US-A- 1 840 455
- US-A- 2 637 434
- US-A- 3 128 014
- US-A- 4 407 433

## Beschreibung

Die Erfindung betrifft eine Vorrichtung und ein Verfahren zum dosierten Abgeben eines schütt- oder rieselfähigen Guts auf ein Förderband, mit einem Rohrabschnitt, der zur Schwerkraftförderung auf das Förderband angeordnet ist, wobei der Rohrabschnitt ein offenes Ende mit einem umlaufenden Randbereich aufweist, der dem Förderband in einem Dosierabstand gegenüberliegt.

Eine derartige Vorrichtung findet beispielsweise in der Nahrungsmittelindustrie Anwendung.

Das Gut, beispielsweise Gemüse- oder Fleischstücke, wird durch einen Trichter in den Rohrabschnitt geleitet, durch den es aufgrund der Schwerkraft auf das Förderband gelangt. Das Förderband transportiert das Gut ab, um es beispielsweise in einem Wasserfallverfahren auf einer Pizza zu verteilen.

Die US 4,407,433 beschreibt eine Dosiereinrichtung für Schüttgut mit einem Rohr, dessen Abstand zu einem darunter angeordneten Förderband für die Dosierung eingestellt wird.

Die US 3,128,014 beschreibt eine Vorrichtung zur Dosierung von Schüttgut, bei der ein Trichter oberhalb eines Förderbands angeordnet ist, und die Dosierung durch Einstellung des offenen Durchlasses zwischen Trichter und Förderband mittels eines einstellbaren Wandabschnitts des Trichters regelbar ist.

Die US 1,840,455 beschreibt eine Vorrichtung zur Dosierung von Schüttgut mittels Förderband, durch Einstellung des Abstands eines Wandabschnitts des Trichters, der oberhalb des Förderbands angeordnet ist.

Die US 2,637,434 beschreibt eine geregelte Dosiereinrichtung für Schüttgut mittels eines Aufgabetrichters, der oberhalb eines Förderbands angeordnet ist. Zur gesteuerten Dosierung wird der Abstand zwischen einer verfahrbaren Wandung des Trichters und dem Förderband geregelt.

Ein Nachteil der bekannten Vorrichtung ist, daß das Gut nur schwierig in der gewünschten Dosierung auf das Förderband abgegeben werden kann, wenn es sich verklumpt hat.

Ein weiterer Nachteil ist, daß das Gut dazu neigt, an einer Innenwand des Rohrabschnitts kleben zu bleiben, insbesondere wenn auftauendes Gut abgegeben wird.

Aufgabe der Erfindung ist es daher, die gattungsgemäße Vorrichtung dahingehend weiter zu entwickeln, daß die Abgabe des Guts vereinfacht bzw. erleichtert und die Dosierung bzw. Streuung verbessert ist.

Diese Aufgabe wird erfindungsgemäß bei einer gattungsgemäßen Vorrichtung nach Anspruch 1 dadurch gelöst, daß dem Rohrabschnitt ein Mittel zum periodischen Variieren des Dosierabstands mindestens eines Abschnitts des umlaufenden Randbereichs zugeordnet ist.

Bevorzugt ist der Rohrabschnitt vertikal angeordnet.

Vorteilhaft umfaßt das untere Ende des Rohrabschnitts eine in Förderrichtung des Förderbands vordere Dosierklappe zur Dosierung des Guts, die mittels eines Motors um eine Schwenkachse verschwenkbar ist.

Alternativ oder zusätzlich dazu umfaßt das untere Ende des Rohrabschnitts bevorzugt eine in Förderrichtung hintere Förderklappe zum Befördern des Guts, die mittels eines Motors um eine Schwenkachse verschwenkbar ist.

Bevorzugt weist der Rohrabschnitt einen quadratischen oder rechteckigen Querschnitt auf.

Die erfindungsgemäße Vorrichtung ist daher vorzugsweise zum dosierten Abgeben eines schütt- oder rieselfähigen Guts auf ein Förderband eingerichtet, mit einem Rohrabschnitt), der zur Schwerkraftförderung oberhalb eines Förderbands anordnbar ist, wobei der Rohrabschnitt ein offenes Ende mit einem umlaufenden Randbereich aufweist, der dem Förderband in einem Dosierabstand gegenüberliegt, wobei das untere Ende des Rohrabschnitts eine in Förderrichtung des Förderbands vordere Dosierklappe zur Dosierung des Guts umfaßt, die um eine Schwenkachse verschwenkbar ist, und eine in Förderrichtung hintere Förderklappe zum Befördern des Guts umfaßt, die um eine Schwenkachse verschwenkbar ist, wobei der Rohrabschnitt ein Mittel zum periodischen Variieren des Dosierabstands der vorderen Dosierklappe aufweist. Bevorzugt weist die Vorrichtung das Förderband auf und die vordere Dosierklappe und die hintere Förderklappe sind gekoppelt, besonders bevorzugt zur winkelgleichen Verschwenkung, und optional mit einem motorischen Antrieb zur Verschwenkung versehen.

Vorteilhaft entspricht eine Schwenkfrequenz der Förderklappe einer Schwenkfrequenz der Dosierklappe.

Eine Schwenkamplitude der Förderklappe kann einer Schwenkamplitude der Dosierklappe entsprechen.

Der Förderklappe und der Dosierklappe kann jeweils ein Motor zugeordnet sein, um diese zu verschwenken.

Bevorzugt sind die Förderklappe und die Dosierklappe jedoch durch eine mit einem Motor verbundene Kopplungseinrichtung miteinander gekoppelt, um die Dosierklappe und die Förderklappe synchron zu verschwenken. Eine solche Kopplung zur synchronen, vorzugsweise winkelgleichen Verschwenkung von Förder- und Dosierklappe, deren Schwenkachsen vorzugsweise senkrecht zur Laufrichtung des Förderbands und in einem Abstand parallel zu dessen Ebene angeordnet sind, führt dazu, dass das zwischen diesen Klappen befindliche Gut nicht komprimiert wird. Das Vermeiden der Kompression des Guts vermindert das Anhaften einzelner Stücke des Guts aneinander, z.B. bei wäßrigem und/oder gefrorenem Gut.

Bevorzugt umfaßt die Kopplungseinrichtung eine erste und eine zweite in Förderrichtung verlaufende Verbindungsstange, die jeweils mit einem ersten Ende an der Förderklappe und mit einem zweiten Ende an der Dosierklappe befestigt sind, wobei die Verbindungsstangen an gegenüberliegenden Seiten der Förderklappe und der Dosierklappe befestigt sind.

Vorteilhaft weisen die zweiten Enden der Verbindungsstangen einen Abstand von der Schwenkachse der Dosierklappe auf, der geringer ist als ein Abstand der ersten Enden der Verbindungstangen von der Schwenkachse der Förderklappe.

Bevorzugt weist die Dosierklappe eine einstellbare Länge auf.

Bevorzugt ist die Länge der Dosierklappe teleskopartig veränderbar.

Bevorzugt weist (weisen) der (die) Motor(en) einen Exzenter auf, um die Förderklappe bzw. die Dosierklappe zu verschwenken.

Bevorzugt sind die Dosierklappe und/oder die Förderklappe jeweils um eine horizontale Schwenkachse verschwenkbar.

Im Falle eines Rohrabschnitts mit quadratischem oder rechteckigem Querschnitt weist die Förderklappe und/oder die Dosierklappe bevorzugt eine Breite auf, die einer Kantenlänge des rechteckigen oder quadratischen Querschnitts entspricht.

Bevorzugt weist der Rohrabschnitt entlang seiner gesamten Länge einen konstanten Querschnitt auf.

Die Aufgabe wird erfindungsgemäß ferner gelöst durch ein Verfahren zum dosierten Abgeben eines schütt- oder rieselfähigen Guts auf ein Förderband, mit einem Rohrabschnitt, der zur Schwerkraftförderung auf das Förderband angeordnet ist, wobei der Rohrabschnitt ein offenes Ende mit einem umlaufenden Randbereich aufweist, der dem Förderband in einem Dosierabstand gegenüberliegt, wobei bei dem Verfahren das Förderband entlang der Förderrichtung bewegt wird, das Gut in den Rohrabschnitt gefüllt wird und der Dosierabstand periodisch variiert wird.

Weiter wird die Aufgabe gelöst durch die Verwendung der erfindungsgemäßen Vorrichtung zur Dosierung eines schütt- oder rieselfähigen Guts, das aneinander haftende Stücke aufweist, insbesondere Lebensmittelstücke, z.B. aus gefrorenem Fleisch, gefrorenem Fisch, aus Käse und/oder gefrorenem Gemüse oder Obst.

Vorteilhaft wird der Rohrabschnitt translatorisch vertikal bewegt, um den Dosierabstand periodisch zu variieren.

Alternativ oder zusätzlich wird der Rohrabschnitt um eine senkrecht zur Förderrichtung verlaufende und mit Abstand zu dem Förderband angeordnete Schwenkachse verschwenkt.

Bevorzugt wird das periodische Variieren abhängig von der Art des Guts mit einer Geschwindigkeit vorgenommen, durch die ein Anhaften des Guts an dem Rohrabschnitt verhindert wird.

Die Erfindung wird nachfolgend anhand von sechs Ausführungsbeispielen unter Bezugnahme auf eine Zeichnung erläutert, von denen:
Fig. 1 eine schematische Darstellung der erfindungsgemäßen Vorrichtung zum dosierten Abgeben eines schütt- oder rieselfähigen Guts gemäß eines ersten Ausführungsbeispiels ist;
Fig. 1A eine schematische Seitenansicht eines Rohrabschnitts der Vorrichtung der Fig. 1 ist;
Fig. 1B eine graphische Darstellung möglicher zeitlicher Verläufe ist, mit denen ein Dosierabstand in dem ersten Ausführungsbeispiel variiert werden kann;
Fig. 2 eine schematische Darstellung der erfindungsgemäßen Vorrichtung gemäß eines zweiten Ausführungsbeispiels ist;
Fig. 2A eine schematische Seitenansicht eines Rohrabschnitts der Vorrichtung der Fig. 2 ist;
Fig. 2B eine graphische Darstellung möglicher zeitlicher Verläufe ist, mit denen ein Dosierabstand in dem zweiten Ausführungsbeispiel variiert werden kann;
Fig. 3 eine schematische Darstellung der erfindungsgemäßen Vorrichtung gemäß eines dritten Ausführungsbeispiels ist;
Fig. 4 eine schematische Darstellung der erfindungsgemäßen Vorrichtung gemäß eines vierten Ausführungsbeispiels ist;
Fig. 5 eine schematische Darstellung der erfindungsgemäßen Vorrichtung gemäß eines fünften Ausführungsbeispiels ist;
Fig. 5A eine schematische Draufsicht auf einen Rohrabschnitt und ein Mittel zum periodischen Variieren des Dosierabstands der Vorrichtung der Fig. 5 ist; und
Fig. 6 eine schematische Darstellung der erfindungsgemäßen Vorrichtung gemäß eines sechsten Ausführungsbeispiels ist.

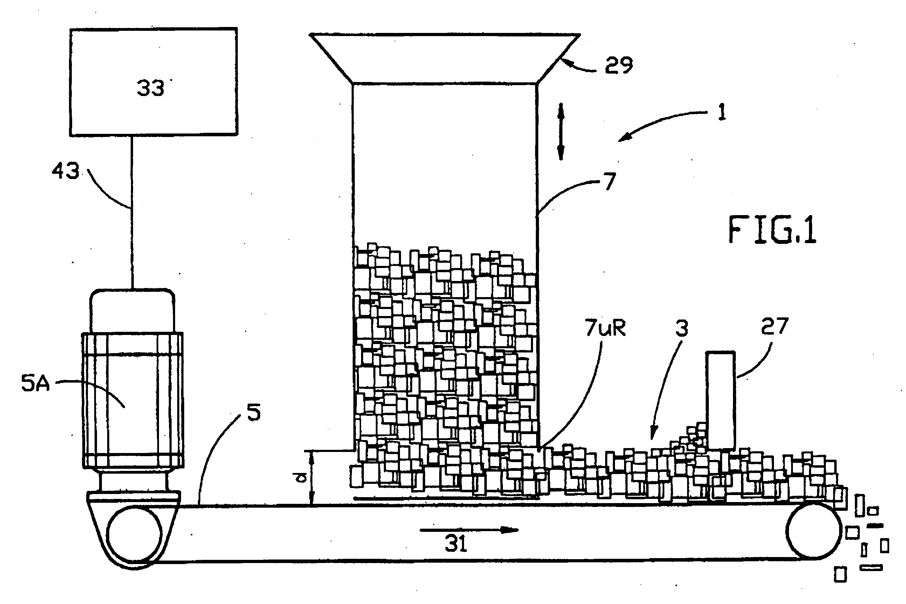

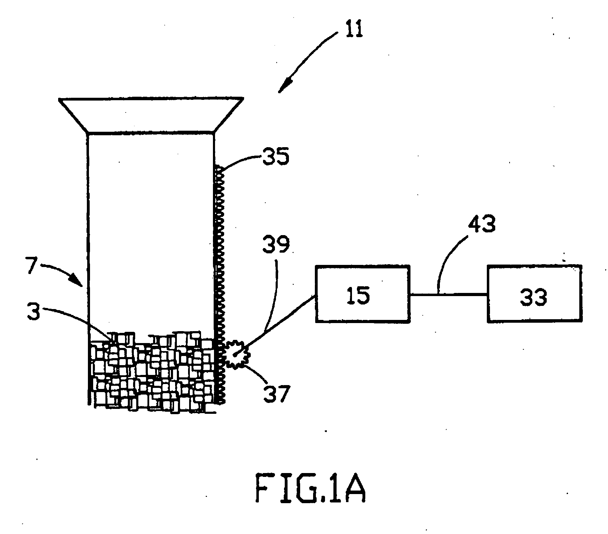

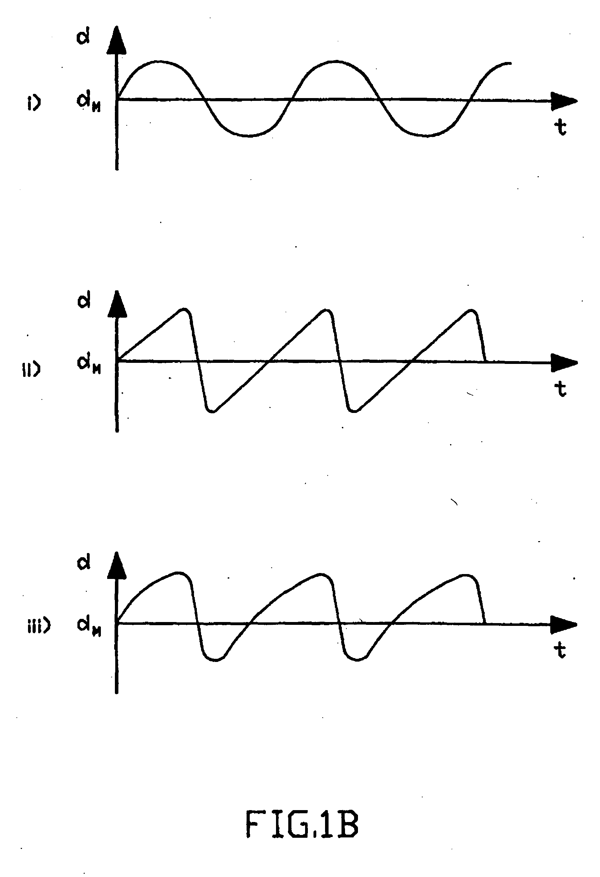

Unter Bezug auf Fig. 1 wird nachfolgend ein erstes Ausführungsbeispiel der Vorrichtung 1 zum dosierten Abgeben eines schütt- oder rieselfähigen Guts 3 beschrieben.

Das schütt- oder rieselfähige Gut 3 wird durch einen Aufnahmebereich 29 in einen Rohrabschnitt 7 gefüllt, der einen quadratischen Querschnitt aufweist. An einem unteren Ende des Rohrabschnitts 7 tritt das Gut 3 durch ein offenes Ende des Rohrabschnitts 7 aus, und gelangt auf ein Förderband 5. Ein umlaufender Randbereich 7uR des Rohrabschnitts 7 umfaßt vorliegend somit vier untere Abschlußkanten, die der Rohrabschnitt 7 an seinem unteren Ende bildet.

Das Förderband 5 ist in einem Dosierabstand d von dem umlaufenden Randbereich 7uR des Rohrabschnitts 7 angeordnet, und fördert das aufliegende Gut 3 entlang einer Förderrichtung 31 des Förderbandes 5 ab.

Ein Förderbandantrieb 5A treibt das Förderband 5 an, wobei der Förderbandantrieb 5A durch ein Kabel 43 mit einer Steuerungseinrichtung 33 verbunden und von dieser gesteuert ist, so daß diese die Aktivierung und Deaktivierung sowie eine Geschwindigkeit des Förderbands 5 vorgibt.

Dem Förderband 5 ist ferner eine Rakel 27 zugeordnet, die eine Schütthöhe des auf dem Förderband 5 angeordneten Guts 3 nach oben beschränkt. Zusätzlich können auf Höhe der Rakel 27 (in Förderrichtung 31) seitliche Begrenzungen angeordnet sein, um den Strom des Guts 3 auf dem Förderband 5 auch seitlich zu begrenzen, so daß das Gut 3 auf Höhe der Rakel 27 eine Öffnung mit vorgegebenen Größe passieren muss.

In Fig. 1A ist eine Seite des in Fig. 1 dargestellten Rohrabschnitts 7 angedeutet, an der eine Zahnstange 35 befestigt ist. Die Zahnstange 35 steht in Eingriff mit einem Zahnrad 37, das ortsfest angeordnet und durch einen Motor 15, beispielsweise ein Schrittmotor, über eine Welle 39 in beiden Richtungen drehbar ist, wobei der Motor 15 ebenfalls durch die Steuerungseinrichtung 33 gesteuert ist. Der Rohrabschnitt 7 ist in einer nicht dargestellten Vertikalführung geführt und höhenverfahrbar.

Wird der Motor 15 durch die Steuerungseinrichtung 33 aktiviert, so dreht sich das Zahnrad 37 in die eine oder andere Richtung, wodurch der Rohrabschnitt 7 in seiner Vertikalführung nach oben oder unten verfahren wird.

Die Steuerungseinrichtung 33 ist derart eingerichtet, z. B. programmgesteuert, daß der Motor 15 das Zahnrad 37 in regelmäßigen vorgegebenen Abständen für eine bestimmte Zeitdauer abwechselnd in die eine oder andere Richtung dreht, wodurch der Rohrabschnitt 7 periodisch angehoben und abgesenkt wird.

In Fig. 1B sind beispielhafte Verläufe für die zeitliche Variation des Dosierabstands d dargestellt. Der Dosierabstand d schwankt um seinen zeitlichen Mittelwert d_{M}, der abhängig von dem Gut 3 variabel einstellbar ist.

In Fig. 1B i) folgt der Dosierabstand d einem Sinusverlauf, so daß der Rohrabschnitt 7 eine gleichmäßige Bewegung ohne große Krafteinwirkung auf das Gut 3 durchführt.

Demgegenüber wird der Rohrabschnitt 7 bei den Verläufen gemäß den Fig. 1B ii und iii) schnell abgesenkt und auf einen unteren Totpunkt der Bewegung hin stark abgebremst, damit sich das Gut 3 von dem Rohrabschnitt 7 löst, und folgend langsam nach oben bewegt, damit das Gut 3 von oben nachrutschen kann.

Die Zahnstange 35, das Zahnrad 37, die Welle 39, der Motor 15 und die Steuerungseinrichtung 33 bilden somit ein Mittel 11 zum periodischen Variieren des Dosierabstands d.

Alternativ können hydraulisch oder pneumatisch betätigte Kolben-Zylinder-Einheiten vorgesehen sein, die mit einem Ende an dem unteren Ende des Rohrabschnitts 7 oder an dem Aufnahmebereich 29 angreifen und mit dem anderen Ende an einem Stützelement angelenkt sind, um den Rohrabschnitt 7 entlang der Vertikalführung zu verfahren.

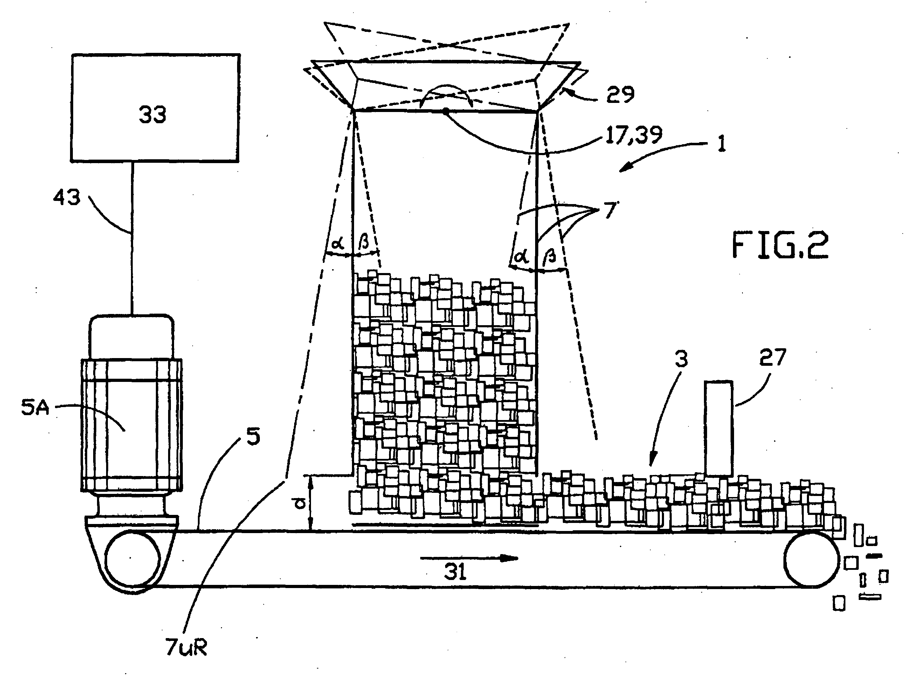

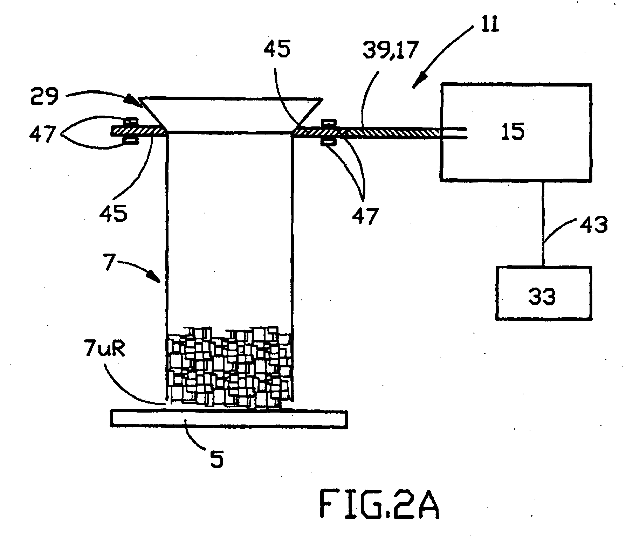

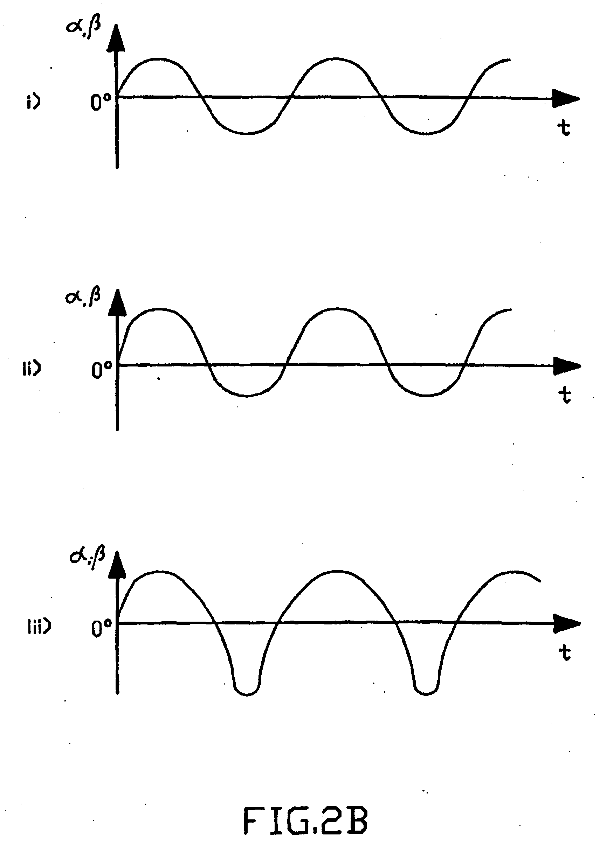

Unter Bezug auf Fig. 2 und 2A wird nachfolgend ein zweites Ausführungsbeispiel der Vorrichtung 1 zum dosierten Abgeben eines schütt- oder rieselfähigen Gutes 3 beschrieben.

Das zweite Ausführungsbeispiel entspricht grundsätzlich dem ersten Ausführungsbeispiel, unterscheidet sich jedoch im Aufbau des Mittels 11 zum periodischen Variieren des Dosierabstands d.

Wie insbesondere in Fig. 2A dargestellt, sind zwei Schwenkzapfen 45 an dem Rohrabschnitt 7 befestigt und jeweils geeignet in Stützelementen 47 gelagert. Ein Schwenkzapfen 45 ist über eine Welle 39 mit einem Motor 15 verbunden, der von der Steuerungseinrichtung 33 gesteuert ist.

Die Welle 39 bildet somit eine Schwenkachse 17 senkrecht zu der Förderrichtung 31 des Förderbandes 5, um die der Rohrabschnitt 7 verschwenkbar ist.

Wie in Fig. 2 dargestellt, ist der Rohrabschnitt 7 zusammen mit seinem Aufnahmebereich 29 aus einer Ausgangslage, die in Fig. 2 mit durchgezogener Linie dargestellt ist, nach links um einen Winkel α schwenkbar (gestrichelt dargestellt) und nach rechts um einen Winkel β schwenkbar (gepunktet dargestellt).

Der Winkel α kann während des Betriebs der Vorrichtung 1 dem Winkel β entsprechen, so daß der Rohrabschnitt 7 um die Schwenkachse 17 symmetrisch verschwenkt wird. Alternativ kann der Winkel α größer oder kleiner als der Winkel β sein, wobei jedoch bevorzugt der Winkel β größer als der Winkel α ist, um das Gut 3 in Förderrichtung 31 aus dem Rohrabschnitt 7 abzugeben.

Das periodische Variieren des Dosierabstands d wird in diesem Ausführungsbeispiel durch das periodische Verschwenken des Rohrabschnitts 7 um die Schwenkachse 17 erreicht, wobei die Schwenkamplituden in die eine und die andere Richtung (das heißt der Winkel α und der Winkel β) nicht notwendigerweise gleich sein müssen.

In Fig. 2B sind beispielhafte Verläufe für Schwenkbewegungen des Rohrabschnitts 7 dargestellt, wobei die Nulllage in Fig. 2 mit durchgezogener Linie dargestellt ist und 0° entspricht, so daß sich die in Fig. 2B dargestellten positiven Winkelwerte auf den Winkel β und sich die in Fig. 2B dargestellten negativen Winkelwerte auf den Winkel α beziehen.

In Fig. 2B i) ist ein Sinusverlauf dargestellt, dessen Mittellage bei 0° liegt, so daß der Rohrabschnitt 7 symmetrisch zur Nulllage in beide Richtungen ausgelenkt wird (maximale Absolutwerte von α und β sind gleich).

In Fig. 2B ii) ist ebenfalls ein Sinusverlauf dargestellt, dessen Mittellage jedoch einen positiven Winkelwert (für β) aufweist, so daß der Rohrabschnitt 7 weiter in Förderrichtung 31 als entgegen der Förderrichtung 31 ausgelenkt wird (β nimmt einen größeren Absolutwert als α an), wodurch mehr Gut 3 in Förderrichtung 31 als entgegen derselben abgegeben wird.

In Fig. 2B iii) ist ein asymmetrischer Verlauf dargestellt, bei dem der Rohrabschnitt 7 bei positiven Winkelwerten langsam bewegt wird und bei negativen Winkelwerten schnell bewegt wird, wobei die Krümmung in den oberen Umkehrpunkten geringer als in den unteren Umkehrpunkten ist und β einen größeren maximalen Absolutwert als α annimmt. Auf diese Weise wird das Gut 3 langsam in Förderrichtung 31 auf das Förderband 5 gestreut, wobei die schnelle Bewegung bei negativen Winkelwerten und die stärkere Krümmung in den unteren Umkehrpunkten dafür sorgt, daß das Gut 3 in dem Rohrabschnitt 7 nachrutschen kann.

Das Mittel 11 zum periodischen Variieren des Dosierabstands d umfaßt somit die Welle 39, den Motor 15 und die Steuerungseinrichtung 33.

Die Schwenkzapfen 45 und die Welle 39 können weiter oben oder weiter unten angeordnet sein (Orientierung wie in Fig. 2), wodurch sich eine horizontale und vertikale Komponente der Schwenkbewegung bei gleichbleibenden Schwenkwinkel ändert. Je höher die Schwenkzapfen 45 und die Welle 39 angeordnet sind, desto größer ist eine horizontale und vertikale Komponente der Schwenkbewegung bei Verschwenkung um den gleichen Schwenkwinkel. Generell sind kleine Schwenkwinkel bevorzugt, z.B. um je 20°, bevorzugt um je 10° beidseitig der Senkrechten.

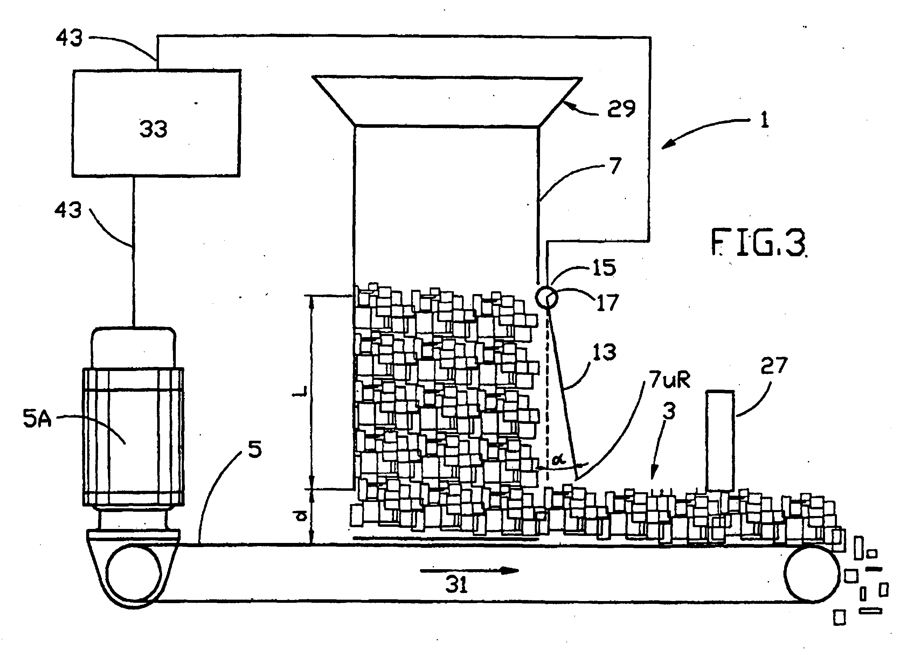

Unter Bezug auf Fig. 3 ist nachfolgend ein drittes Ausführungsbeispiel beschrieben, das sich von dem unter Bezug auf Fig. 1 und 1A beschriebenen Ausführungsbeispiel lediglich durch die Ausführung des Mittels 11 zum periodischen Variieren des Dosierabstands d unterscheidet.

Der Rohrabschnitt 7 in Fig. 3 weist wiederum einen quadratischen Querschnitt mit vier Seitenwänden auf, wobei drei Seitenwände bis auf das Förderband 5 reichen. Die vierte Seitenwand des quadratischen Querschnitts ist an dem unteren Ende des Rohrabschnitts 7 durch eine Dosierklappe 13 gebildet, die um eine Schwenkachse 17 mittels eines Motors 15 verschwenkbar ist. Der umlaufende Randbereich 7uR umfaßt in diesem Ausführungsbeispiel somit drei ortsfeste Abschlußkanten, die der Rohrabschnitt 7 an seinem unteren Ende bildet, sowie die in Fig. 3 untere Abschlußkante der Dosierklappe 13.

Die Dosierklappe 13 weist eine Länge L auf, die einstellbar ist, beispielsweise teleskopartig oder durch das Anfügen oder Entfernen von Abstandsstücken, wobei die eingestellte Länge L im Betrieb konstant bleibt.

Die Länge L legt den Dosierabstand d zwischen dem unteren Ende der Dosierklappe 13 und dem Förderband 5 fest.

Die Dosierklappe 13 ist um die Schwenkachse 17 aus einer Ausgangslage (gestrichelt) um einen Winkel α in eine verschwenkte Stellung (durchgezogene Linie) schwenkbar.

Durch das Verschwenken der Dosierklappe 13 um den Winkel α wird der Dosierabstand d zwischen dem unteren Ende der Dosierklappe 13 und dem Förderband 5 variiert.

Die Dosierklappe 13 wird von dem Motor 15 durch die Steuerungseinrichtung 33 periodisch verschwenkt, wodurch sich ein periodisches Variieren des Dosierabstands d ergibt.

Das Mittel 11 zum periodischen Variieren des Dosierabstands d umfaßt somit vorliegend die Dosierklappe 13, die Schwenkachse 17 sowie den Motor 15 und die Steuerungseinrichtung 33.

Die Dosierklappe 13 wird vorliegend aus der in Fig. 3 gezeigten Ausgangslage (gestrichelte Linie), in der diese senkrecht zu dem Förderband 5 verläuft, nach außen verschwenkt (in die mit durchgezogener Linie dargestellte Stellung). Dadurch wird erreicht, daß das Gut 3 in dem Rohrabschnitt 7 möglichst wenig von der Dosierklappe 13 beim Zurückfahren in die Ausgangsstellung komprimiert wird.

Alternativ kann die Dosierklappe 13 beim Zurückfahren in die Ausgangslage (gestrichelte Darstellung) auch über die Ausgangslage hinaus in den Rohrabschnitt 7 verschwenkt werden, so daß eine Mittellage der gestrichelt dargestellten Ausgangslage entspricht.

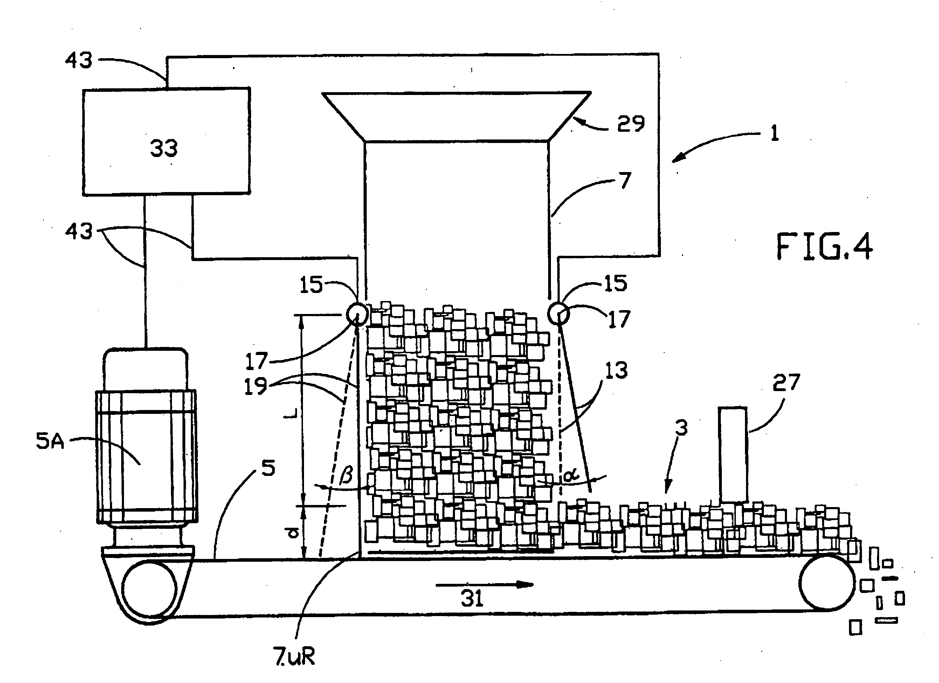

Unter Bezug auf Fig. 4 ist nachfolgend ein viertes Ausführungsbeispiel der Vorrichtung 1 zum dosierten Abgeben eines schütt- oder rieselfähigen Gutes 3 beschrieben, das vom Aufbau her dem unter Bezug auf Fig. 3 beschriebenen Ausführungsbeispiel entspricht, jedoch zusätzlich in Förderrichtung 31 gegenüber der Dosierklappe 13 eine Förderklappe 19 aufweist. Der umlaufende Randbereich 7uR umfaßt in diesem Ausführungsbeispiel somit die in Fig. 4 hintereinander liegenden ortsfesten Abschlußkanten, die der Randabschnitt 7 an seinem unteren Ende bildet, sowie die in Fig. 4 untere Abschlußkante der Dosierklappe 13 und der Förderklappe 19.

Die Förderklappe 19 ist um eine Schwenkachse 17 verschwenkbar, die von dem Förderband 5 den gleichen Abstand aufweist wie die Schwenkachse 17 der Dosierklappe 13.

Der Förderklappe 19 ist ebenfalls ein Motor 15 zugeordnet, so daß diese wie die Dosierklappe 13 durch die Steuerungseinrichtung 33 periodisch um ihre Schwenkachse 17 verschwenkbar ist.

Während des Betriebs der Vorrichtung 1 wird die Dosierklappe 13 um den Winkel α und die Förderklappe 19 um den Winkel β verschwenkt. Bevorzugt entspricht der Winkel α dem Winkel β. Alternativ können die Dosierklappe 13 und die Förderklappe 19 um verschiedene Winkel α, β verschwenkt werden.

Die Dosierklappe 13 und die Förderklappe 19 werden jeweils mit einer bestimmten Schwenkfrequenz verschwenkt, wobei die Dosierklappe 13 und die Förderklappe 19 bevorzugt mit derselben Schwenkfrequenz verschwenkt werden. Alternativ können die Dosierklappe 13 und die Förderklappe 19 mit verschiedenen Schwenkfrequenzen verschwenkt werden.

Werden die Dosierklappe 13 und die Förderklappe 19 mit derselben Schwenkfrequenz verschwenkt, so werden die Dosierklappe 13 und die Förderklappe 19 bevorzugt synchron und gleichphasig verschwenkt. Alternativ kann eine Phasendifferenz einen beliebigen konstanten oder zeitlich veränderlichen Wert annehmen.

Die Schwenkachse 17 der Förderklappe 19 ist vorliegend auf der gleichen Höhe gegenüber dem Förderband 5 wie die Schwenkachse 17 der Dosierklappe 13 angeordnet. Alternativ kann die Schwenkachse 17 der Förderklappe 19 in Vertikalrichtung der Fig. 4 oberhalb oder unterhalb der Schwenkachse 17 der Dosierklappe 13 angeordnet sein.

Das Mittel 11 zum periodischen Variieren des Dosierabstands d umfaßt somit die Dosierklappe 13 und die Förderklappe 19 mit dem Motor 15 und der Steuerungseinrichtung 33.

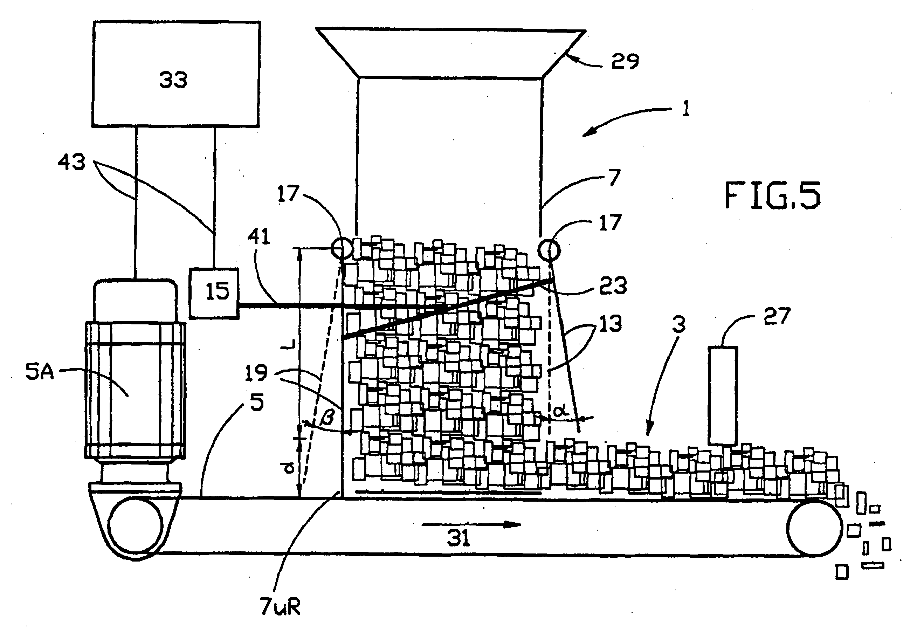

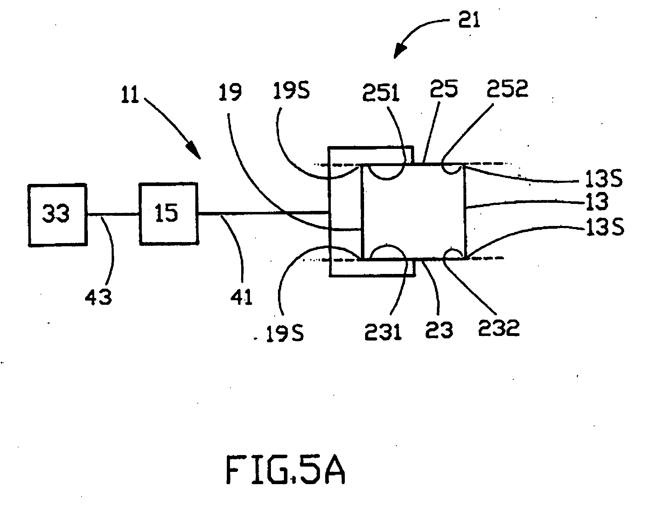

Unter Bezug auf Fig. 5 und 5A ist nachfolgend ein fünftes Ausführungsbeispiel der Vorrichtung 1 zum dosierten Abgeben eines schütt- oder rieselfähigen Gutes 3 beschrieben, das im wesentlichen dem unter Bezug auf Fig. 4 beschriebenen Ausführungsbeispiel entspricht, wobei jedoch anstelle der Motoren eine Kopplungseinrichtung 21 zwischen der Dosierklappe 13 und der Förderklappe 19 und einem gemeinsamen Motor vorgesehen ist.

Die Kopplungseinrichtung 21 umfaßt eine Kopplungsstange 41, die mit dem in Fig. 5 gezeigten linken Ende in Eingriff mit einem Motor 15 steht, durch den sie in Richtung auf die Dosier- und Förderklappe 13, 19 oszillierend bewegbar ist.

Wie in Fig. 5A gezeigt, zweigt sich das in Fig. 5 gezeigte rechte Ende der Kopplungsstange 41 U-förmig auf, wobei die gegenüberliegenden U-Schenkel jeweils gelenkig mit einer ersten und zweiten Verbindungsstange 23, 25 in Eingriff stehen.

Die Verbindungsstangen 23, 25 weisen jeweils ein erstes Ende 231, 251, das an einer Seite 19S der Förderklappe 19 befestigt ist, und ein zweites Ende 232, 252, das an einer Seite 13S der Dosierklappe 13 befestigt ist, auf.

Wird die Kopplungsstange 41 horizontal nach links oder rechts bewegt (Orientierung wie in Fig. 5), so werden die Dosierklappe 13 und die Förderklappe 19 synchron nach rechts oder links verschwenkt (Orientierung wie in Fig. 5).

Durch die Kopplungseinrichtung 21 ferner ist somit sichergestellt, daß die Schwenkfrequenz der Dosierklappe 13 der Schwenkfrequenz der Dosierklappe 19 entspricht, und die Schwenkbewegungen gleichphasig sind.

Weisen die ersten Enden 231, 251 von der ihnen zugeordneten Schwenkachse 17 den gleichen Abstand auf wie die zweiten Enden 232, 252 von der ihnen zugeordneten Schwenkachse, so ist durch die Kopplungseinrichtung 21 ferner sichergestellt, daß die Dosierklappe 13 und die Förderklappe 19 um denselben Winkel verschwenkt werden.

Weisen die ersten Enden 231, 251 jedoch einen größeren Abstand von der ihnen zugeordneten Schwenkachse 17 wie die zweiten Enden 232, 152 von der ihnen zugeordneten Schwenkachse 17 auf (wie in Fig. 5 dargestellt), so wird die Dosierklappe 13 um einen Winkel α verschwenkt, der größer ist als ein Winkel β, um den die Förderklappe 19 verschwenkt wird.

Die ersten Enden 231, 251 und zweiten Enden 232, 252 sind bevorzugt einstellbar an den Seiten 13S, 19S angeordnet, um das Verhältnis der gegenseitigen Schwenkamplituden der Dosierklappe 13 und der Förderklappe 19 einstellen zu können.

Das Mittel 11 zum periodischen Variieren des Dosierabstands d umfaßt somit die Dosierklappe 13 und die Förderklappe 19 mit dem Motor 15 und der Steuerungseinrichtung 33 sowie die Kopplungseinrichtung 21.

Vorliegend greift die Kopplungsstange 41 an den Verbindungsstangen 23, 25 an, die mit der Dosierklappe 13 und der Förderklappe 19 in Eingriff stehen. Alternativ kann die Kopplungsstange 41 direkt an der Dosierklappe 13 (oder der Förderklappe 19) angreifen, wobei in diesem Fall die Schwenkbewegung durch die erste und die zweite Verbindungsstange 23, 25 an die Förderklappe 19 (oder die Dosierklappe 13) weitergegeben wird.

Wie in Fig. 5A gestrichelt dargestellt, können die bis auf das Förderband 5 geführten ortsfesten Seitenwände des Rohrabschnitts 7 in und entgegen der Förderrichtung 31 verlängert sein, um zu verhindern, daß Gut 3 aus einem dreieckförmigen Spalt zwischen diesen Seitenwänden und der Förderklappe bzw. der Dosierklappe 19, 13 entweicht, wenn diese aus dem Rohrabschnitt 7 geschwenkt sind.

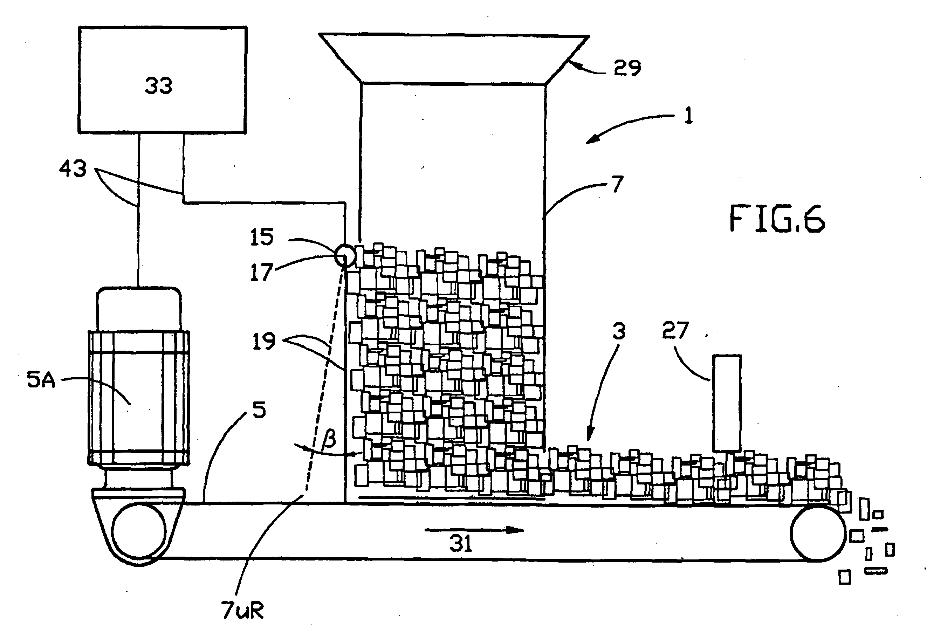

Unter Bezug auf Fig. 6 wird nachfolgend ein sechstes Ausführungsbeispiel beschrieben.

Die in Fig. 6 dargestellte Vorrichtung 1 entspricht der in Fig. 4 dargestellten Vorrichtung 1 bis auf den Unterschied, daß die Dosierklappe 13 fehlt und die in Fig. 6 rechts dargestellte Seitenwand verkürzt ist, um das Gut 3 aus dem Rohrabschnitt 7 zu leiten. Der umlaufende Randbereich 7uR umfaßt in diesem Ausführungsbeispiel somit drei ortsfeste Abschlußkanten, die der Rohrabschnitt 7 an seinem unteren Ende bildet, sowie die untere Abschlußkante der Förderklappe 19.

Die Förderklappe 19 wird auf die gleiche Weise angetrieben und gesteuert wie die Förderklappe 19 des in Fig. 4 dargestellten Ausführungsbeispiels.

Die Förderklappe 19 der Fig. 6 bildet somit mit ihrem unteren Ende einen Abschnitt des umlaufenden Randbereichs 7uR des offenen Endes des Rohrabschnitts 7, dessen Abstand zu dem Förderband 5 durch den Motor 15 und die Steuerungseinrichtung 33 periodisch variiert wird.

Das Mittel 11 zum periodischen Variieren des Dosierabstandes d umfaßt daher die Förderklappe 19 mit zugeordnetem Motor 15 und Steuerungseinrichtung 33.

Unter Bezug auf das dritte, vierte, fünfte und sechste Ausführungsbeispiel ist eine Dosierklappe 13 und/oder eine Förderklappe 19 beschrieben, die in den Ausführungsbeispielen eine Breite aufweisen, die einer Länge einer Seite des quadratischen Querschnitts des Rohrabschnitts 7 entspricht. Der Rohrabschnitt 7 kann allgemein jedoch auch einen rechteckigen oder sonstigen Querschnitt aufweisen, wobei die Dosierklappe 13 und die Förderklappe 19 jeweils bevorzugt eine Breite aufweisen, die einer Kantenlänge des Querschnitts des Rohrabschnitts 7 entspricht. Alternativ kann die Dosierklappe 13 bzw. die Förderklappe 19 eine Breite aufweisen, die kleiner als eine Kantenlänge des Rohrabschnitts 7 ist.

Die Motoren 15 zur Verschwenkung der Dosierklappe 13 bzw. der Förderklappe 19 weisen bevorzugt einen Exzenter auf, der mit der Dosierklappe 13 bzw. der Förderklappe 19 in Eingriff steht, um deren periodische Verschwenkung zu bewirken.

In den oben beschriebenen Ausführungsbeispielen wird der Dosierabstand d durch ein Mittel 11 periodisch variiert, das dem Rohrabschnitt 7 zugeordnet ist. Eine optimale Amplitude und Frequenz des periodischen Variierens des Dosierabstands d werden der Vorrichtung 1 abhängig von dem abzugebenden Gut 3 vorgegeben, um diese auf ein bestimmtes abzugebendes Gut zu kalibrieren. Optimale Werte für die Amplitude und die Frequenz können beispielsweise experimentell für jedes Gut 3 bestimmt werden und zeichnen sich dadurch aus, daß das Gut, ohne Anhaftungen und gut dosierbar gefördert wird, ohne in seiner Qualität beeinträchtigt zu werden.

Die Innenwand des Rohrabschnitts 7 ist bevorzugt mit Teflon oder dergleichen beschichtet, um ein Anhaften des Guts 3 an dem Rohrabschnitt 7 zu verhindern und dadurch das Abgeben des Guts 3 aus dem Rohrabschnitt 7 zu erleichtern. Ferner ist der Rohrabschnitt 7 bevorzugt wärmeisoliert, um beispielsweise ein Auftauen von darin befindlichen gefrorenem Gut 3 zu verhindern.

Als Beispiele für das Gut seien Gemüsestücke, Fleischstücke, Obststücke, Hackfleisch oder Reis genannt, wobei diese wahlweise auch in gefrorener Form der Vorrichtung 1 zugeführt werden können.

In dem Rohrabschnitt 7 ist ein nicht dargestellter Füllstandsmesser angeordnet, der einen Füllstatus desselben erfasst. Bei Unterschreiten einer vorbestimmten Grenze erzeugt der Höhenmesser ein Signal, das eine Anzeige aktiviert, woraufhin ein Bediener dem Rohrabschnitt 7 neues Gut 3 zuführt. Alternativ kann das Signal einer Nachfülleinrichtung zugeführt sein, die bei Empfang des Signals eine vorbestimmte Menge des Guts 3 in den Rohrabschnitt 7 abgibt.

Das Förderband 5 ist in der Regel eben und horizontal angeordnet, kann jedoch auch muldenförmig oder trogförmig gebildet sein. Abweichend von einer horizontalen Schwenkachse der Dosier- oder Förderklappe 13, 19 kann in diesem Fall die Lage der Schwenkachse an die Form des Förderbands 5 angepasst sein.

Die Förderklappe 19 kann insbesondere wie in Fig. 2B dargestellt bewegt werden, wobei die Nulllage jeweils durch die in Fig. 4, 5 und 6 mit durchgezogener Linie dargestellte Lage der Förderklappe 19 definiert ist und die Förderklappe 19 bei positiven Winkelwerten in dem Rohrabschnitt 7 angeordnet ist. Bei einem Verlauf gemäß Fig. 2B i) würde die Förderklappe 19 somit symmetrisch in beide Richtungen um die Nulllage verschwenkt. Bei einem Verlauf gemäß Fig. 2B ii) würde die Förderklappe 19 mehr in den Rohrabschnitt 7 als aus dem Rohrabschnitt 7 verschwenkt, so daß eine Mittellage innerhalb des Rohrabschnitts 7 liegt. Auf diese Weise würde das Gut 3 gegenüber dem Verlauf von Fig. 2B i) stärker in Förderrichtung 31 bewegt, wobei jedoch ausreichend Raum für nachrutschendes Gut 3 geschaffen wird, indem die Förderklappe 19 aus dem Rohrabschnitt 7 heraus verschwenkt wird. Bei einem Verlauf gemäß Fig. 2B iii) würde die Förderklappe 19 in dem Rohrabschnitt 7 langsam bewegt, um das Gut 3 möglichst wenig zu komprimieren, und außerhalb des Rohrabschnitts 7 schnell bewegt, um schnell Raum für nachrutschendes Gut 3 zu schaffen.

Die Dosierklappe 13 kann insbesondere wie in Fig. 2B ii) dargestellt bewegt werden, wobei die Nulllage durch die in Fig. 4 und 5 gestrichelte Lage definiert ist. Die Dosierklappe 13 führt in diesem Fall eine gleichmäßige Bewegung ohne große Krafteinwirkung auf das Gut 3 durch, so daß das Gut 3 möglichst wenig komprimiert wird. Ferner wird die Dosierklappe 13 um eine Mittellage verschwenkt, die außerhalb des Rohrabschnitts 7 liegt, so daß die Dosierklappe 13 nur geringfügig in den Rohrabschnitt 7 verschwenkt wird, um das Gut 3 zu schonen.

Die in Fig. 5A gestrichelt dargestellte Verlängerung der ortsfesten Seitenwände des Rohrabschnitts 7 kann ebenso in den Ausführungsbeispielen der Fig. 3, 4 und 6 Anwendung finden, um das Entweichen des Guts 3 aus dem dreieckförmigen Spalt zwischen dem Rohrabschnitt 7 und der Dosierklappe 13 bzw. der Förderklappe 19 zu verhindern, wenn diese aus dem Rohrabschnitt 7 geschwenkt sind, wobei natürlich in dem Ausführungsbeispiel der Fig. 3 eine in Förderrichtung 31 hintere Verlängerung und in dem Ausführungsbeispiel der Fig. 6 eine in Förderrichtung 31 vordere Verlängerung ausreichend ist.

### Bezugszeichenliste:

- 1: Vorrichtung zum dosierten Abgeben eines schütt- oder rieselfähigen Gutes
- 3: Gut
- 5: Förderband
- 5A: Förderbandantrieb
- 7: Rohrabschnitt
- 7uR: umlaufender Randbereich des offenen Endes des Rohrabschnitts
- 11: Mittel zum periodischen Variieren des Dosierabstands
- 13: Dosierklappe
- 13S: Seite der Dosierklappe 13
- 15: Motor
- 17: Schwenkachse
- 19: Förderklappe
- 19S: Seite der Förderklappe 19
- 21: Kopplungseinrichtung
- 23: erste Verbindungsstange
- 231: erstes Ende der ersten Verbindungsstange
- 232: zweites Ende der ersten Verbindungsstange
- 25: zweite Verbindungsstange
- 251: erstes Ende der zweiten Verbindungsstange
- 252: zweites Ende der zweiten Verbindungsstange
- 27: Rakel
- 29: Aufnahmebereich
- 31: Förderrichtung
- 33: Steuerungseinrichtung
- 35: Zahnstange
- 37: Zahnrad
- 39: Welle
- 41: Kopplungsstange
- 43: Kabel
- 45: Schwenkzapfen
- 47: Stützelement für Schwenkzapfen 45
- d: Dosierabstand
- d_{M}: zeitlicher Mittelwert des Dosierabstands d
- L: Länge

## Patentansprüche

1. Vorrichtung (1) zum dosierten Abgeben eines schütt- oder rieselfähigen Guts (3) auf ein Förderband (5), mit einem Rohrabschnitt (7), der zur Schwerkraftförderung auf das Förderband (5) anordnbar ist, wobei der Rohrabschnitt (7) ein offenes Ende mit einem umlaufenden Randbereich (7uR) aufweist, der dem Förderband (5) in einem Dosierabstand (d) gegenüberliegt, wobei dem Rohrabschnitt (7) ein Mittel (11) zum periodischen Variieren des Dosierabstands (d) mindestens eines Abschnitts des umlaufenden Randbereichs (7uR) zugeordnet ist **dadurch gekennzeichnet, daß** das untere Ende des Rohrabschnitts (7) eine in Förderrichtung (31) des Förderbands (5) vordere Dosierklappe (13) zur Dosierung des Guts (3) umfaßt, die mittels eines Motors (15) um eine Schwenkachse (17) verschwenkbar ist und das untere Ende des Rohrabschnitts (7) eine in Förderrichtung (31) hintere Förderklappe (19) zum Befördern des Guts (3) umfaßt, die mittels eines Motors (15) um eine Schwenkachse (17) verschwenkbar ist.

2. Vorrichtung nach Anspruch 1, **dadurch gekennzeichnet, daß** der Rohrabschnitt (7) vertikal angeordnet ist.

3. Vorrichtung nach einem der vorangehenden Ansprüche, **dadurch gekennzeichnet, daß** der Rohrabschnitt (7) einen quadratischen oder rechteckigen Querschnitt aufweist.

4. Vorrichtung nach einem der vorangehenden Ansprüche, **dadurch gekennzeichnet, daß** eine Schwenkfrequenz der Förderklappe (19) einer Schwenkfrequenz der Dosierklappe (13) entspricht.

5. Vorrichtung nach einem der vorangehenden Ansprüche, **dadurch gekennzeichnet, daß** eine Schwenkamplitude der Förderklappe (19) einer Schwenkamplitude der Dosierklappe (13) entspricht.

6. Vorrichtung nach einem der vorangehenden Ansprüche, **dadurch gekennzeichnet, daß** der Förderklappe (19) und der Dosierklappe (13) jeweils ein Motor (15) zugeordnet ist, um diese zu verschwenken.

7. Vorrichtung nach einem der Ansprüche 1 bis 5, **dadurch gekennzeichnet, daß** die Förderklappe (19) und die Dosierklappe (13) durch eine mit einem Motor verbundene Kopplungseinrichtung (21) miteinander gekoppelt sind, um die Dosierklappe (13) und die Förderklappe (19) synchron zu verschwenken.

8. Vorrichtung nach Anspruch 7, **dadurch gekennzeichnet, daß** die Kopplungseinrichtung (21) eine erste und eine zweite in Förderrichtung (31) verlaufende Verbindungsstange (23, 25) umfaßt, die jeweils mit einem ersten Ende (231, 251) an der Förderklappe (19) und mit einem zweiten Ende (232, 252) an der Dosierklappe (13) befestigt sind, wobei die Verbindungsstangen (23, 25) an gegenüberliegenden Seiten (13S, 19S) der Förderklappe (19) und der Dosierklappe (13) befestigt sind.

9. Vorrichtung nach Anspruch 8, **dadurch gekennzeichnet, daß** die zweiten Enden (232, 252) der Verbindungsstangen (23, 25) einen Abstand von der Schwenkachse (17) der Dosierklappe (13), der geringer als ein Abstand der ersten Enden (231, 251) der Verbindungsstangen (23, 25) von der Schwenkachse (17) der Förderklappe (19)ist, aufweisen.

10. Vorrichtung nach einem der vorangehenden Ansprüche, **dadurch gekennzeichnet, daß** die Dosierklappe (13) eine einstellbare Länge (L) aufweist.

11. Vorrichtung nach Anspruch 10, **dadurch gekennzeichnet, daß** die Länge (L) teleskopartig veränderbar ist.

12. Vorrichtung nach einem der vorangehenden Ansprüche, **dadurch gekennzeichnet, daß** der (die) Motor(en) (15) einen Exzenter aufweist (aufweisen), um die Förderklappe (19) bzw. die Dosierklappe (13) zu verschwenken.

13. Vorrichtung nach einem der vorangehenden Ansprüche, **dadurch gekennzeichnet, daß** die Dosierklappe (13) und/oder die Förderklappe (19) jeweils um eine horizontale Schwenkachse (17) verschwenkbar sind.

14. Vorrichtung nach einem der Ansprüche 3 bis 13, **dadurch gekennzeichnet, daß** die Förderklappe (19) und/oder die Dosierklappe (13) eine Breite aufweisen, die einer Kantenlänge des rechteckigen oder quadratischen Querschnitts entspricht.

15. Vorrichtung nach einem der vorangehenden Ansprüche, **dadurch gekennzeichnet, daß** der Rohrabschnitt (7) entlang seiner gesamten Länge einen konstanten Querschnitt aufweist.

16. Verfahren zum dosierten Abgeben eines schütt- oder rieselfähigen Guts (3) auf ein Förderband (5), mit einem Rohrabschnitt (7), der zur Schwerkraftförderung auf das Förderband (5) angeordnet ist, wobei der Rohrabschnitt (7) ein offenes Ende mit einem umlaufenden Randbereich (7uR) aufweist, der dem Förderband (5) in einem Dosierabstand (d) gegenüberliegt, mit:
Bewegen des Förderbands (5) entlang der Förderrichtung (31),
Einfüllen des Guts (3) in den Rohrabschnitt (7), **gekennzeichnet durch** ein periodisches Variieren des Dosierabstands (d).

17. Verfahren nach Anspruch 16, **dadurch gekennzeichnet, daß** der Rohrabschnitt (7) translatorisch vertikal bewegt wird, um den Dosierabstand (d) periodisch zu variieren.

18. Verfahren nach Anspruch 16 oder 17, **dadurch gekennzeichnet, daß** der Rohrabschnitt (7) um eine senkrecht zur Förderrichtung (31) verlaufende und mit Abstand zu dem Förderband (5) angeordnete Schwenkachse (17) verschwenkt wird.

19. Verfahren nach einem der Ansprüche 16 bis 18, **dadurch gekennzeichnet, daß** das periodische Variieren abhängig von der Art des Guts (3) mit einer Geschwindigkeit vorgenommen wird, durch die ein Anhaften des Guts (3) an dem Rohrabschnitt (7) verhindert wird.

## Claims

1. Device (1) for metered delivery of a pourable or tricklable material (3) onto a conveyor belt (5), with a pipe section (7) arranged for gravitational force conveying onto the conveyor belt (5), wherein the pipe section (7) has an open end with an encircling edge region (7uR) opposite the conveyor belt (5) at a metering spacing (d), wherein means (11) for periodic varying of the metering spacing (d) of at least one section of the encircling edge region (7uR) is associated with the pipe section (7), **characterised in that** the lower end of the pipe section (7) comprises a metering flap (13), which is forward in conveying direction (31) of the conveyor belt (5), for metering of the material (3), the metering flap (13) being pivotable about a pivot axis (17) by means of a motor (15), and the lower end of the pipe section (7) comprises a conveyor flap (19), which is rearward in conveying direction (31), for conveying the material (3), the conveying flap (19) being pivotable about a pivot axis (17) by means of a motor (15).

2. Device according to claim 1, **characterised in that** the pipe section (7) is arranged to be vertical.

3. Device according to one of the preceding claims, **characterised in that** the pipe section (7) has a square or rectangular cross-section.

4. Device according to any one of the preceding claims, **characterised in that** a pivot frequency of the conveyor flap (19) corresponds with a pivot frequency of the metering flap (13).

5. Device according to any one of the preceding claims, **characterised in that** a pivot amplitude of the conveyor flap (19) corresponds with a pivot amplitude of the metering flap (13).

6. Device according to any one of the preceding claims, **characterised in that** a respective motor (15) is associated with each of the conveyor flap (19) and metering flap (13) in order to pivot this.

7. Device according to any one of claims 1 to 5, **characterised in that** the conveyor flap (19) and the metering flap (13) are coupled together by a coupling device (21), which is connected with a motor, in order to synchronously pivot the metering flap (13) and the conveyor flap (19).

8. Device according to claim 7, **characterised in that** the coupling device (21) comprises a first and a second connecting rod (23, 25) extending in conveying direction (31), the connecting rods being respectively fastened by a first end (231, 251) to the conveyor flap (19) and by a second end (232, 252) to the metering flap (13), wherein the connecting rods (23, 25) are fastened to opposite sides (13S, 19S) of the conveyor flap (19) and the metering flap (13).

9. Device according to claim 8, **characterised in that** the second ends (232, 251) of the connecting rods (23, 25) have a spacing from the pivot axis (17) of the metering flap (13) which is smaller than a spacing of the first ends (231, 251) of the connecting rods (23, 25) from the pivot axis (17) of the conveyor flap (19).

10. Device according to any one of the preceding claims, **characterised in that** the metering flap (13) has a settable length (L).

11. Device according to claim 10, **characterised in that** the length (L) is telescopically variable.

12. Device according to any one of the preceding claims, **characterised in that** the motor or motors (15) has or have an eccentric in order to pivot the conveyor flap (19) or the metering flap (13).

13. Device according to any one of the preceding claims, **characterised in that** the metering flap (13) and/or the conveyor flap (19) is or are pivotable about a respective horizontal pivot axis (17).

14. Device according to any one of claims 3 to 13, **characterised is that** the conveyor flap (19) and/or the metering flap (13) have a width which corresponds with an edge length of the rectangular or square cross-section.

15. Device according to any one of the preceding claims, **characterised in that** the pipe section (7) has a constant cross-section along its entire length.

16. Method for metered delivery of a pourable or tricklable material (3) onto a conveyor belt (5), with a pipe section (7) which is arranged for gravitational force conveying onto the conveyor belt (5), wherein the pipe section (7) has an open end with an encircling edge region (7uR) opposite the conveyor belt (5) at a metering spacing (d), comprising:
moving the conveyor belt (5) along the conveying direction (31) and filling the material (3) into the pipe section (7), **characterised by** a periodic varying of the metering spacing (d).

17. Method according to claim 16, **characterised in that** the pipe section (7) is translationally vertically moved so as to periodically vary the metering spacing (d).

18. Method according to claim 16 or 17, **characterised in that** the pipe section (7) is pivoted about a pivot axis (17) extending perpendicularly to the conveying direction (31) and arranged at a spacing from the conveyor belt (5).

19. Method according to any one of claims 16 to 18, **characterised in that** the periodic variation is undertaken in dependence on the kind of material (3) at a speed by which adhesion of the material (3) to the pipe section (7) is prevented.

## Revendications

1. Dispositif (1) pour la délivrance dosée sur une bande transporteuse (5) d'un produit (3) pouvant s'écouler ou pouvant être répandu, avec une partie tubulaire (7) qui peut être disposée en vue d'un transport par gravité sur la bande transporteuse (5), sachant que la partie tubulaire (7) présente une extrémité ouverte avec une région de bord entourante (7uR) qui fait face à la bande transporteuse (5) à une distance de dosage (d), sachant qu'un moyen (11) est associé à la partie tubulaire (7) pour faire varier périodiquement la distance de dosage (d) d'au moins une partie de la région de bord entourante (7uR), **caractérisé en ce que** l'extrémité inférieure de la partie tubulaire (7) comprend un clapet de dosage (13), avant dans la direction de transport (31) de la bande transporteuse (5), pour doser le produit (3), clapet qui peut être pivoté autour d'un axe de pivotement (17) au moyen d'un moteur (15), et l'extrémité inférieure de la partie tubulaire (7) comprend un clapet de transport (19), arrière dans la direction de transport (31), pour transporter le produit (3), clapet qui peut être pivoté autour d'un axe de pivotement (17) au moyen d'un moteur (15).

2. Dispositif selon la revendication 1, **caractérisé en ce que** la partie tubulaire (7) est disposée verticalement.

3. Dispositif selon l'une des revendications précédentes, **caractérisé en ce que** la partie tubulaire (7) présente une section carrée ou rectangulaire.

4. Dispositif selon l'une des revendications précédentes, **caractérisé en ce que** la fréquence de pivotement du clapet de transport (19) correspond à la fréquence de pivotement du clapet de dosage (13).

5. Dispositif selon l'une des revendications précédentes, **caractérisé en ce que** l'amplitude de pivotement du clapet de transport (19) correspond à l'amplitude de pivotement du clapet de dosage (13).

6. Dispositif selon l'une des revendications précédentes, **caractérisé en ce qu'**un moteur respectif (15) est associé au clapet de transport (19) et au clapet de dosage (13) pour les faire pivoter.

7. Dispositif selon l'une des revendications 1 à 5**, caractérisé en ce que** le clapet de transport (19) et le clapet de dosage (13) sont couplés entre eux par un organe de couplage (21) relié à un moteur, afin de faire pivoter le clapet de dosage (13) et le clapet de transport (19) de manière synchrone.

8. Dispositif selon la revendication 7, **caractérisé en ce que** l'organe de couplage (21) comprend une première et une deuxième barres d'accouplement (23, 25) s'étendant dans la direction de transport (31), qui sont chacune fixées par une première extrémité (231, 251) sur le clapet de transport (19) et par une deuxième extrémité (232, 252) sur le clapet de dosage (13), sachant que les barres d'accouplement (23, 25) sont fixées sur des côtés opposés (13S, 19S) du clapet de transport (19) et du clapet de dosage (13).

9. Dispositif selon la revendication 8, **caractérisé en ce que** les deuxièmes extrémités (232, 252) des barres d'accouplement (23, 25) présentent une distance par rapport à l'axe de pivotement (17) du clapet de dosage (13) qui est inférieure à la distance des premières extrémités (231, 251) des barres d'accouplement (23, 25) par rapport à l'axe de pivotement (17) du clapet de transport (19).

10. Dispositif selon l'une des revendications précédentes, **caractérisé en ce que** le clapet de dosage (13) présente une longueur réglable (L).

11. Dispositif selon la revendication 10, **caractérisé en ce que** la longueur (L) peut être modifiée télescopiquement.

12. Dispositif selon l'une des revendications précédentes, **caractérisé en ce que** le ou les moteurs (15) présentent un excentrique pour faire pivoter respectivement le clapet de transport (19) et le clapet de dosage (13).

13. Dispositif selon l'une des revendications précédentes, **caractérisé en ce que** le clapet de dosage (13) et/ou le clapet de transport (19) sont respectivement pivotants autour d'un axe de pivotement horizontal (17).

14. Dispositif selon l'une des revendications 3 à 13, **caractérisé en ce que** le clapet de transport (19) et/ou le clapet de dosage (13) présentent une largeur qui correspond à une longueur de côté de la section rectangulaire ou carrée.

15. Dispositif selon l'une des revendications précédentes, **caractérisé en ce que** la partie tubulaire (7) présente une section constante sur toute sa longueur.

16. Procédé pour la délivrance dosée sur une bande transporteuse (5) d'un produit (3) pouvant s'écouler ou pouvant être répandu, avec une partie tubulaire (7) qui est disposée en vue d'un transport par gravité sur la bande transporteuse (5), sachant que la partie tubulaire (7) présente une extrémité ouverte avec une région de bord entourante (7uR) qui fait face à la bande transporteuse (5) à une distance de dosage (d), avec les étapes suivantes :
déplacement de la bande transporteuse (5) le long de la direction de transport (31), remplissage du produit (3) dans la partie tubulaire (7),
**caractérisé en ce qu'**on fait varier périodiquement la distance de dosage (d).

17. Procédé selon la revendication 16, **caractérisé en ce que** la partie tubulaire (7) est déplacée verticalement en translation pour faire varier périodiquement la distance de dosage (d).

18. Procédé selon la revendication 16 ou 17, **caractérisé en ce que** la partie tubulaire (7) est pivotée autour d'un axe de pivotement (17) s'étendant perpendiculairement à la direction de transport (31) et disposé à distance de la bande transporteuse (5).

19. Procédé selon l'une des revendications 16 à 18, **caractérisé en ce que** la variation périodique est entreprise, en fonction du type de produit (3), à une vitesse qui empêche le produit (3) d'adhérer sur la partie tubulaire (7).
